# EUROPÄISCHE PATENTSCHRIFT

(11) **EP 0 527 440 B1**
(45) Veröffentlichungstag und Bekanntmachung des Hinweises auf die Patenterteilung: **08.03.1995**
(21) Anmeldenummer: 92113447.4
(22) Anmeldetag: 06.08.1992
(51) Int. Cl.: F16B 5/12, B60R 13/04

(54) **Vorrichtung zur Halterung einer Leiste an einem Träger**
Device for mounting a strip on a support
Dispositif de maintien d'une bande à un support

(30) Priorität: 09.08.1991 DE 4126442
(43) Veröffentlichungstag der Anmeldung: 17.02.1993
(73) Patentinhaber: TRW United-Carr GmbH & Co. KG, D-67677 Enkenbach-Alsenborn (DE)
(72) Erfinder: Rückwardt, Hans-Werner, W-6719 Eisenberg (DE)
(74) Vertreter: Eder, Eugen, Dipl.-Ing.

(56) Entgegenhaltungen:
- DE-B- 1 625 497
- GB-A- 1 446 290
- US-A- 4 617 209
- US-A- 4 698 882

## Beschreibung

Die Erfindung bezieht sich auf eine Vorrichtung zur Halterung einer im Querschnitt im wesentlichen C-förmigen Leiste an einem Träger, insbesondere einer Schutzleiste an einer Kraftfahrzeugkarosserie.

Als Stand der Technik ist bereits eine derartige Vorrichtung bekannt (GB-A-1 446 290), welche so gestaltet ist, daß das Halteelement völlig innerhalb des jeweiligen Zwischenelements eingelagert ist. Dementsprechend weist das Halteelement außenseitig, beidseitig eines Lagerbereichs Verzahnungen auf, welche in Gegenverzahnungen des jeweiligen Zwischenelements eingreifen. Das Halteelement ist einstückig mit einem Zapfen versehen, welcher in einer entsprechenden Öffnung des Trägers eingreift. Nach Einsatz des Halteelements wird damit das Zwischenelement über die Verzahnungen zusammen mit der Leiste eingesetzt.

Nachteilig bei dieser bekannten Konstruktion ist der relativ geringe Toleranzbereich zwischen dem Halteelement, der Länge der Leiste und den beiden die Leiste begrenzenden Zwischenelementen.

Als weiterer Stand der Technik sind Vorrichtungen zur Halterung von Leisten, beispielsweise von Zier- oder Schutzleisten an einer Kraftfahrzeugkarosserie bekannt (US-PS 3 188 730, US-PS 3 246 440, US-PS 3 606 433, DE 35 30 253 A1).

Darüber hinaus ist ein Halteclip aus Kunststoff gekannt (DE-GM 89 11 882.0), welcher zur verschiebesicheren Montage einer Zierleiste dient.

Alle bisher bekannten Vorrichtungen zur Halterung von Leisten speziell an einer Kraftfahrzeugkarosserie weisen jedoch insgesamt den Nachteil auf, daß sie keine einfach ausgebildete Positionierungs- und Arretierungsmöglichkeit sowie keinen wirksamen Toleranzausgleich besitzen.

Entsprechend liegt der vorliegenden Erfindung die Aufgabe zugrunde, eine Vorrichtung der eingangs genannten Art so auszubilden, daß unter Beibehaltung von an sich bekannten Befestigungssystemen für Leisten an Kraftfahrzeugen auf einfache Weise ein guter Toleranzausgleich sowie eine gute Positionierungs- und Arretierungsmöglichkeit auch bei Vorliegen größerer Toleranzen gegeben ist.

Diese Aufgabe wird mit den Merkmalen im kennzeichnenden Teil des Anspruchs 1 gelöst. Durch die besondere Gestaltung der Zwischenelemente und des Halteelements wird damit ohne großen Mehraufwand die Möglichkeit geschaffen, einen sehr guten Toleranzausgleich zu gewährleisten, sowie eine einwandfreie Positionierung zu bewirken.

Beispielsweise besteht die Möglichkeit, daß ein Zwischenelement in einem separaten Arbeitsprozeß in die Leiste eingelegt und lösbar darin befestigt wird, wodurch die Leiste an einer Position über die Verrastung exakt positioniert werden kann. Am Ende des Arbeitsprozesses wird ein weiteres Zwischenelement am anderen Ende der Leiste eingeschoben und arretiert zusätzlich die gesamte Einheit, d.h. die Schutz- oder Zierleiste an dem Träger, beispielsweise der Karosserie eines Kraftfahrzeuges, in funktionsrichtiger Lage, und zwar unabhängig von vorhandenen Toleranzen.

Vorzugsweise bestehen Zwischenelement und Leiste aus dem gleichen Grundmaterial, um eine recyclinggerechte Verwertung zu gewährleisten.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Seitenansicht einer Tür eines Kraftfahrzeuges mit Schutzleiste,
- Fig. 2: eine Ansicht entsprechend Ausschnitt II nach Fig. 1, teils gebrochen,
- Fig. 3: eine Ansicht nach Ausschnitt III in Fig. 1 vor dem Einsatz des abschließenden Zwischenelements, jedoch noch ohne zugeordnetes Halteelement,
- Fig. 4: eine Draufsicht auf das Halteelement,
- Fig. 5: einen Schnitt V-V nach Fig. 4,
- Fig. 6: eine Seitenansicht des Halteelements, teils geschnitten,
- Fig. 7: ein erstes Zwischenelement in Draufsicht,
- Fig. 8: ein weiteres Zwischenelement in Draufsicht,
- Fig. 9: eine Seitenansicht des Zwischenelements nach Fig. 8
- Fig. 10: das Zwischenelement nach Fig. 8 in montiertem Zustand mit dem Halteelement,
- Fig. 11: eine Seitenansicht der montierten Einheit nach Fig. 10 mit aufgeschobener, schematisch dargestellter Leiste im Schnitt XI-XI.

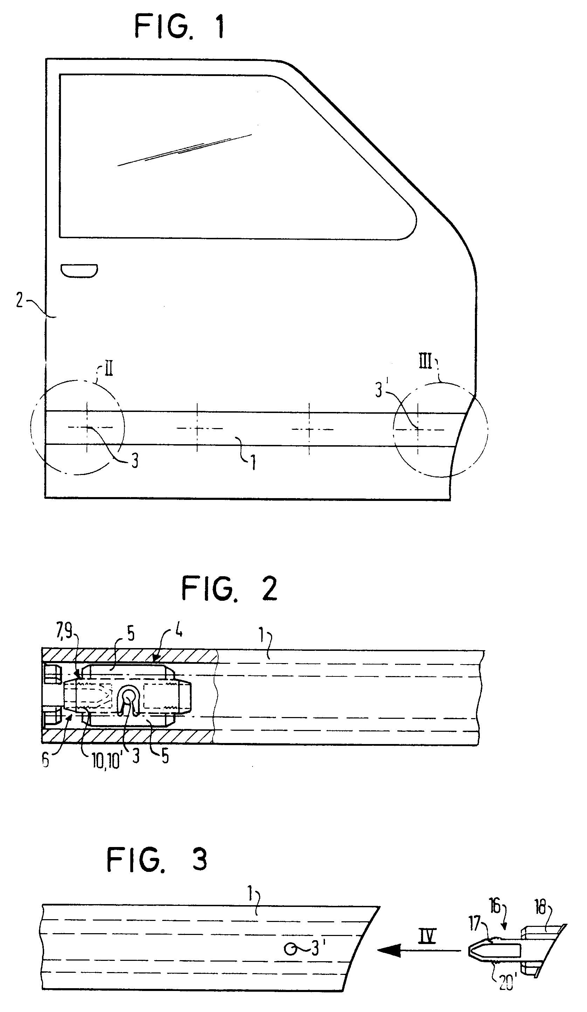

Fig. 1 zeigt in schematischer Seitenansicht eine Leiste 1, welche an einen Träger 2, beispielsweise einer Tür eines Kraftfahrzeuges, angeordnet ist. Zur Anbringung dieser Leiste 1 an dem Träger 2 ist nach Fig. 2 für den Bereich II ein Halteelement 4 z.B. aus Kunststoff vorgesehen, welches mit einem Zwischenelement 6 zusammenwirkt und die Verbindung herstellt. Hierbei weist das Halteelement 4 einander gegenüberliegende Eingriffsbereiche 5 auf, welche von der im Querschnitt C-förmig ausgebildeten Leiste 1 übergriffen werden. An dem Träger 2 ist ein mit einem Halteprofil versehener Bolzen 3 angeordnet, auf welchem das Halteelement 4 befestigt ist.

In einem separaten Arbeitsprozess wird das Zwischenelement 6 in die Leiste eingelegt und befestigt und ist somit in der in Fig. 2 dargestellten Lage exakt positioniert. Durch die am Zwischenelement 6 befindliche Verzahnung 10', welche mit einer Verzahnung 10 des Halteelements 4 zusammenwirkt, kann die Leiste 1 auf das Halteprofil aufgeschoben werden und läßt sich nach Bedarf bzw. Toleranz bei Montage entsprechend positionieren und arretieren.

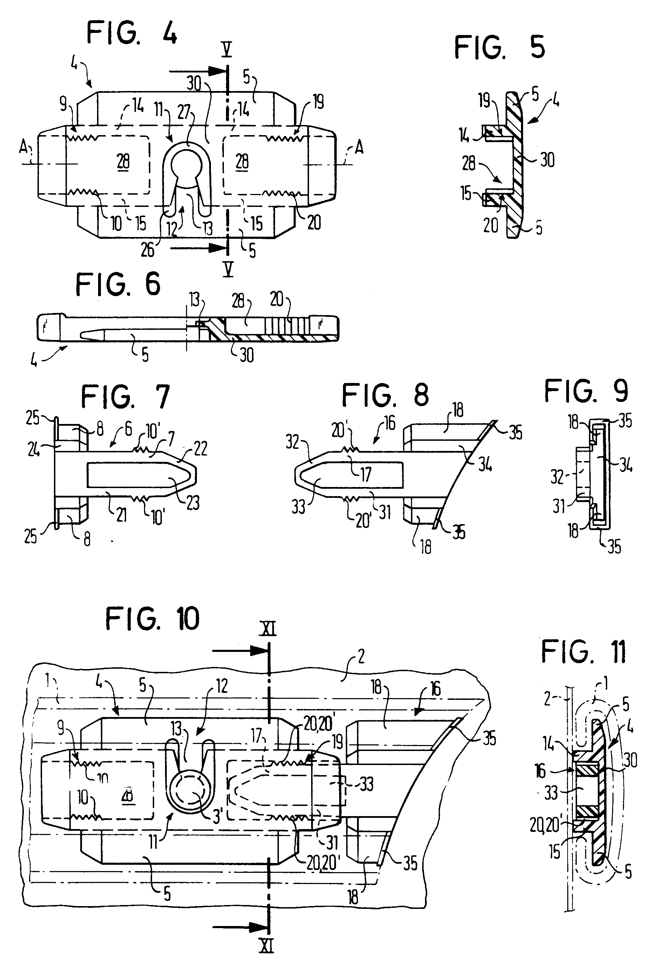

Am Ende der Montage wird in ein nach Figur 3 auf dem endseitigen Bolzen 3 befindliches, mit dem ersten Halteelement 4 identisches Halteelement ein nachfolgend beschriebenes Zwischenelement 16 eingeschoben, welches wiederum mit seiner Verrastung in den entsprechenden Verrastungsbereich des Halteelements eingreift und damit die gesamte Einheit bei optimalem Toleranzausgleich funktionssicher positioniert (sh. Fig. 10, 11).

In Figur 4, 5 und 6 ist das Halteelement 4 näher dargestellt. Wie ersichtlich, weist das Halteelement 4 zwei Gegenverrastungsbereiche 9, 19 auf, welche mit einander gegenüberliegenden, zahnstangenartigen Verzahnungen 10, 20 versehen sind.

Zwischen den beiden Gegenverrastungsbereichen 9, 19 des Halteelements 4 befindet sich ein Lagerbereich 11 zur Einlagerung des mit einem Halteprofil versehenen Bolzens 3 bzw. 3'. Der Lagerbereich 11 weist eine Einschubzone 12 mit federnder Zunge 13 für das entsprechende Halteprofil des Bolzens auf.

Es sind durch andere, an sich bekannte Befestigungsmöglichkeiten, wie z.B. Ankerfuß, Grobgewindebolzen, Kleben etc. denkbar, um über den Lagerbereich 11 das Halteelement 4 an dem Träger 2 zu befestigen.

Aus Figur 4 ist ersichtlich, daß die Einschubzone 12 mit der federnden Zunge 13 rechtwinklig zu den Längsachsen A-A der beiden zahnstangenartigen Verzahnungen 10, 20 jedes Gegenverrastungsbereichs 9, 19 angeordnet ist. Beidseitig der federnden Zunge 12 befindet sich eine Aussparung 26; der Lagerbereich 11 ist durch einen Bund 27 gebildet.

Hierdurch besteht die Möglichkeit, einen mit einem Kopf versehenen Bolzen 3 rechtwinklig zu den Achsen A-A unter Zurückdrücken der federnden Zunge 13 in den Einschubbereich 12 so lange einzuschieben, bis sich der Körper des Bolzens im Bund 27 einlagert, wonach die federnde Zunge 13 wieder in ihre Ausgangsposition zurückgleitet und damit das Halteelement 4 gemäß Figur 2 funktionssicher an dem Bolzen 3 und damit am Träger 2 befestigt ist.

Aus Figur 5 ist ersichtlich, daß das Halteelement 4 zwei parallel laufende Schenkel 14, 15 aufweist, welche sich in Längsrichtung der Leiste 1 erstrecken und innenseitig jeweils die zahnstangenartigen Verzahnungen 10 bzw. 20 besitzen. Zwischen den beiden Schenkeln 14 und 15 befindet sich ein Kanal 28 zur Aufnahme der entsprechenden Verrastungsbereiche der Zwischenelemente 6 bzw. 16.

Die beiden parallel laufenden Schenkel 14 und 15 sind nach Figur 5 und 6 oberseitig durch eine Platte 30 verbunden, in welcher die Einschubzone 12 mit der federnden Zunge 13 und die Eingriffsbereiche 5 für die Leiste 1 angeordnet sind. Unterhalb der Eingriffsbereiche 5 befindet sich nach Figur 5 genügend Zwischenraum, um zwei entsprechend geformte Schenkel der Leiste 1 nach dem Aufschieben funktionssicher zu haltern.

In Figur 7 ist das in Figur 2 näherungsweise dargestellte Zwischenelement 6 deutlicher offenbart: Dieses Zwischenelement 6 weist einen Steg 21 auf, welcher außenseitig mit zahnstangenartigen Verzahnungen 10' des Verrastungsbereichs 7 versehen ist. Der Steg 21 geht in den Eingriffsbereich 8 für die Leiste 1 über, welcher als Platte 24 ausgebildet ist. Weiterhin besitzt der Steg 21 eine konisch zulaufende Einführzone 22, wobei mittig zwischen den zahnstangenartigen Verzahnungen 10' ein Langloch 23 vorgesehen ist.

Zur Abstimmung der Kräfte kann das Langloch 23 mit Versteifungsprofilen versehen sein. Durch dieses Langloch 23 wird eine bestimmte Elastizität der zahnstangenartigen Verzahnung 10' bewirkt.

Die Endseite der Platte 24 ist mit an der Leiste 1 anliegenden Abschlußzungen 25 versehen. Das Zwischenelement 6 kann so ausgebildet sein, daß es bezüglich der Endseite der Platte 24 und des Eingriffsbereichs 8 an Kontur und Profil der Leiste 1 angepaßt ist.

Wie vorstehend ausgeführt, wird dieses Zwischenelement 6 in einem separaten Arbeitsprozess in die Leiste 1 eingelegt und unlösbar darin befestigt, wobei sich die Eingriffsbereiche 8 im Inneren der Leiste einlagern. Da der Steg 21 mit dem Verrastungsbereich 7, d.h. den Verzahnungen 10', unterhalb der Platte 24 verläuft, liegt dieser Verrastungsbereich 7 frei und kann gemäß Figur 2 in die entsprechende Gegenrast 9 des Halteelements 4 eingeschoben werden. Durch die miteinander zusammenwirkenden Verzahnungen 10 bzw. 10' des Zwischenelements 6 und des Halteelements 4 ist ein Toleranzausgleich in weiten Grenzen möglich.

Es ist auch denkbar, daß beide Zwischenelemente lose in die Leiste eingesetzt werden und auch so ihre Funktion erfüllen.

Infolge der Vielzahl von Zähnen der Verzahnung 10 bzw. 20 des Halteelements 4, welche mit den Verzahnungen 10' bzw. 20' des betreffenden Zwischenelements 6 bzw. 16 zusammenwirken, ergibt sich darüber hinaus ein guter Formschluß zwischen dem Halteelement 4 und den Zwischenelementen 6 bzw. 16.

In Figur 8 und 9 ist das Zwischenelement 16 näher dargestellt, welches gemäß den Figuren 1 und 3 auf der rechten Seite der Tür Abschluß und Halterung für die Leiste 1 bildet.

Dieses Zwischenelement 16 weist analog dem Zwischenelement 6 einen Steg 31 mit einem Langloch 33 und einer Einführzone 32 auf, wobei der Steg 31 seinerseits in die Platte 34 übergeht. Die Platte 34 besitzt die beiden Eingriffsbereiche 18. Außenseitig des Steges 31 befinden sich als Verrastungsbereich 17 Verzahnungen 20'.

Die Endseite der Platte 34 ist der Abschlußkontur der Leiste 1 angepaßt, wobei - wie bei dem Zwischenelement 6 - im Endbereich der Platte 34 Abschlußzungen 35 vorgesehen sind, um die Leiste 1 im jeweiligen Endbereich einwandfrei abzudecken.

Da sich der Steg 31 unterhalb der Platte 34 befindet, läßt er sich mit den Verzahnungen 20' in den rechten Kanal 28 des Halteelements 4 einschieben, wonach die Verzahnungen 20' in die Verzahnungen 20 des Halteelements 4 eingreifen.

In Fig. 10 ist diese vorgenannte Situation dargestellt:
Wie ersichtlich, ist das Halteelement 4 im Lagerbereich 11 an einem Profilbolzen 3' befestigt, welcher seinerseits an dem Träger 2 angebracht ist. Nach dem Aufschieben der Leiste 1, welche gemäß Figur 11 beispielsweise C-förmig ausgebildet ist und mit ihren Schenkeln die Eingriffsbereiche 5 des Halteelements 4 übergreift, läßt sich das Zwischenelement 16 analog Figur 3 in Pfeilrichtung IV einschieben, wobei sich die Verzahnungen 20' des Steges 31 des Zwischenelements 16 in den Verzahnungen 20 des Gegenverrastungsbereichs 19 des Halteelements 4 einlagern. Wiederum ist ein guter Toleranzausgleich infolge der Vielzahl der Zähne gegeben.

Aus Figur 11 ist ersichtlich, daß sich der Steg 31 in dem Kanal 28 (Figur 5) des Halteelements 4 eingelagert hat. Hierbei ist der Eingriffsbereich 18 des Zwischenelements 16 ebenso wie der Eingriffsbereich 8 des Zwischenelements 6 in Abmessung und Kontur an den Eingriffsbereich 5 des Halteelements 4 angepaßt, so daß die Leiste 1 in ihrem Abschlußbereich ebenfalls die Eingriffsbereiche 18 des Zwischenelements 16 übergreift. Nach beendeter Montage liegen die Abschlußzungen 25 und 35 an den Endseiten der Leiste an, so daß ein vollkommener Abschluß gegeben ist.

Da die beiden Zwischenelemente 6 und 16 jeweils eine entsprechende Verzahnung 10' bzw. 20' aufweisen, ist ein gutes Zusammenwirken mit den entsprechenden Gegenverzahnungen 10 und 20 des Halteelements 4 gegeben, wodurch eine sehr gute Arretierung und eine Positionierung der Leiste 1 bewirkt wird.

Statt der Verzahnungen des Halteelements und der beiden Zwischenelemente können auch andere Konfigurationen Anwendung finden, wobei lediglich sichergestellt werden muß, daß die entsprechenden Verrastungsbereiche 7 bzw. 17 der Zwischenelemente 6 bzw. 16 mit den entsprechenden Gegenverrastungsbereichen 9 bzw. 19 des Halteelements 4 zusammenwirken.

Weist die Leiste 1 eine andere Konfiguration als im Querschnitt C-Form auf, so können die Eingriffsbereiche 5 des Halteelements 4 bzw. 8 und 18 der Zwischenelemente 6 bzw. 16 so gestaltet sein, daß in Anpassung an die Konfiguration der Leiste eine sichere Halterung an den Träger, d.h. der Kraftfahrzeugkarosserie gegeben ist.

## Patentansprüche

1. Vorrichtung zur Halterung einer im Querschnitt im wesentlichen C-förmigen Leiste (1) an einem Träger (2), insbesondere einer Schutzleiste an einer Kraftfahrzeugkarosserie,
mit einem Halteelement (4) welches beidseitig eines Lagerbereichs (11) einen Gegenverrastungsbereich (9; 19) besitzt, in welche Verrastungsbereiche (7; 17) jeweils eines Zwischenelements (6; 16) einlagerbar sind,
wobei das an zwei gegenüberliegenden Seiten mit Eingriffsbereichen (5) für die Leiste (1) versehene Halteelement (4) zwei parallel laufende Schenkel (14, 15) besitzt, welche sich in Längsrichtung der Leiste (1) erstrecken,
wobei die am Ende der Leiste (1) angeordneten Zwischenelemente (6; 16) jeweils einen Eingriffsbereich (8; 18) für die Leiste (1) besitzen und mindestens ein Zwischenelement (16) über den Eingriffsbereich (18) in die Leiste (1) eingeschoben ist,
**dadurch gekennzeichnet**,
daß die beiden parallel laufenden Schenkel (14, 15), die innenseitig jeweils eine zahnstangenartige Verzahnung (10, 20) besitzen, oberseitig durch eine Platte (30) verbunden sind, in welcher eine als Lagerbereich (11) ausgebildete Einschubzone (12) mit einer federnden Zunge (13) für ein Halteprofil eines an dem Träger (2) befestigten Bolzens (3) und die Eingriffsbereiche (5) für die Leiste (1) angeordnet sind,
und daß die Zwischenelemente (6; 16) jeweils mit einem Steg (21, 31) versehen sind, welcher außenseitig mit zahnstangenartigen Verzahnungen (10', 20') des Verrastungsbereichs (7; 17) versehen ist.

2. Vorrichtung nach Anspruch 1,
dadurch gekennzeichnet,
daß ein Zwischenelement (6) über den Eingriffsbereich (8) untrennbar mit der Leiste (1) verbunden ist.

3. Vorrichtung nach Anspruch 1,
dadurch gekennzeichnet,
daß der Steg (21, 31) eine konisch zulaufende Einführzone (22; 32) aufweist und mittig zwischen den zahnstangenartigen Verzahnungen (10', 20') ein Langloch (23; 33) besitzt.

4. Vorrichtung nach Anspruch 1 und 3,
dadurch gekennzeichnet,
daß der Steg (21; 31) in den Eingriffsbereich (8; 18) für die Leiste (1) übergeht, welcher als Platte (24; 34) ausgebildet ist.

5. Vorrichtung nach Anspruch 4,
dadurch gekennzeichnet,
daß die Endseite der Platte (24; 34) des in die Leiste (1) eingeschobenen Zwischenelements (6; 16) an Kontur und Profil der Leiste (1) angepaßt ist.

6. Vorrichtung nach Anspruch 5,
dadurch gekennzeichnet,
daß die Endseite der Platte (24; 34) mit an der Leiste (1) anliegenden Abschlußzungen (25; 35) versehen ist.

7. Vorrichtung nach einem der vorhergehenden Ansprüche,
dadurch gekennzeichnet,
daß die Eingriffsbereiche (5; 8; 18) jedes Zwischenelements (6; 16) und des Halteelements (4) die gleichen, an die zu halternde Leiste (1) angepaßte Abmessungen aufweist.

8. Vorrichtung nach einem der vorhergehenden Ansprüche,
dadurch gekennzeichnet,
daß das Zwischenelement (6; 16) und die Leiste (1) aus dem gleichen Material bestehen.

## Claims

1. Device for mounting a cross-sectionally essentially C-shaped strip (1) on a support (2), in particular a protective strip on a motor vehicle body, with a holding element (4) which, on both sides of a bearing region (11), has a counter-catch region (9; 19), in which counter-catch regions catch regions (7; 17) of in each case an intermediate element (6; 16) can be located, the holding element (4), which is provided on two opposite sides with engagement regions (5) for the strip (1), having two parallel-running legs (14, 15) which extend in the longitudinal direction of the strip (1), the intermediate elements (6; 16) arranged at the end of the strip (1) in each case having an engagement region (8; 18) for the strip (1), and at least one intermediate element (16) being inserted into the strip (1) via the engagement region (18), characterized in that the two parallel-running legs (14, 15), which in each case have on the inside a rack-like toothing (10, 20), are connected on the upper side by a plate (30), in which an insertion zone (12), designed as a bearing region (11), with a resilient tongue (13) for a holding profile of a bolt (3) fastened on the support (2) and the engagement regions (5) for the strip (1) are arranged, and in that the intermediate elements (6; 16) are in each case provided with a web (21, 31) which is provided on the outside with rack-like toothings (10', 20') of the catch region (7; 17).

2. Device according to Claim 1, characterized in that an intermediate element (6) is connected inseparably to the strip (1) via the engagement region (8).

3. Device according to Claim 1, characterized in that the web (21, 31) has a conically tapering introduction zone (22; 32) and, centrally between the rack-like toothings (10', 20'), a slot (23; 33).

4. Device according to Claims 1 and 3, characterized in that the web (21; 31) merges into the engagement region (8; 18) for the strip (1), which region is designed as a plate (24; 34).

5. Device according to Claim 4, characterized in that the end side of the plate (24; 34) of the intermediate element (6; 16) inserted into the strip (1) is adapted to contour and profile of the strip (1).

6. Device according to Claim 5, characterized in that the end side of the plate (24; 34) is provided with terminal tongues (25; 35) bearing against the strip (1).

7. Device according to one of the preceding claims, characterized in that the engagement regions (5; 8; 18) of each intermediate element (6; 16) and of the holding element (4) have the same dimensions adapted to the strip (1) to be mounted.

8. Device according to one of the preceding claims, characterized in that the intermediate element (6; 16) and the strip (1) consist of the same material.

## Revendications

1. Dispositif pour le maintien d'une bande (1) sensiblement en forme de C en section transversale sur un support (2), notamment une bande de protection sur une carrosserie de véhicule automobile,
comprenant un élément de maintien (4) qui comprend de chaque côté d'une zone d'appui (11) une zone à contre-enclenchement (9; 19) dans laquelle peuvent être enclenchées des zones d'enclenchement (7; 17) respectives d'un élément intermédiaire (6; 16),
l'élément de maintien (4) qui est muni sur deux côtés opposés de zones de venue en prise (5) pour la bande (1) comprenant deux branches (14, 15) s'étendant parallèlement, qui s'étendent en direction longitudinale de la bande (1),
les éléments intermédiaires (6; 16) disposés à l'extrémité de la bande (1) comprenant respectivement une zone de venue en prise (8; 18) pour la bande (1), et au moins un élément intermédiaire (16) est enfoncé par l'intermédiaire de la zone de venue en prise (18) dans la bande (1),
caractérisé en ce que
les deux branches (14, 15) s'étendant parallèlement et qui comprennent chacune à l'intérieur une denture de type crémaillère (10, 20) sont reliées sur leur côté supérieur par une plaque (30) dans laquelle sont disposées une zone d'insertion (12) constituée sous forme d'une zone de fixation (11) comprenant une languette élastique (13) destinée au profil de retenue d'un tourillon (3) fixé au support (2), et les zones de venue en prise (5) pour la bande (1),
et en ce que les éléments intermédiaires (6; 16) sont chacun munis d'une branche (21, 31) qui est équipée sur son côté supérieur de dentures (10', 20') du type crémaillère de la zone d'enclenchement (7; 17).

2. Dispositif selon la revendication 1,
caractérisé en ce qu'un élément intermédiaire (6) est relié de façon inséparable à la bande (1) par l'intermédiaire de la zone de venue en prise (8).

3. Dispositif selon la revendication 1,
caractérisé en ce que la branche (21, 31) présente une zone d'introduction (22; 32) d'allure conique et comprend en son centre un trou allongé (23; 33) entre les dentures de type crémaillère (10', 20').

4. Dispositif selon les revendications 1 et 3,
caractérisé en ce que la branche (21; 31) se prolonge par la zone de venue en prise (8; 18) destinée à la bande (1), qui est constituée sous forme d'une plaque (24; 34).

5. Dispositif selon la revendication 4,
caractérisé en ce que le côté d'extrémité de la plaque (24; 34) de l'élément intermédiaire (6; 16) enfoncé dans la bande (1) est adapté au contour et au profil de la bande (1).

6. Dispositif selon la revendication 5,
caractérisé en ce que le côté d'extrémité de la plaque (24; 34) est muni de languettes d'arrêt (25; 35) qui s'appliquent contre la bande (1).

7. Dispositif selon l'une quelconque des revendications précédentes,
caractérisé en ce que la zone de venue en prise (5; 8; 18) de chaque élément intermédiaire (6; 16) et de l'élément de maintien (4) présente les mêmes dimensions qui sont adaptées à la bande (1) à maintenir.

8. Dispositif selon l'une quelconque des revendications précédentes,
caractérisé en ce que l'élément intermédiaire (6; 16) et la bande (1) sont constitués en le même matériau.
